# EUROPEAN PATENT APPLICATION

(11) **EP 4 608 034 A1**
(43) Date of publication of application: **27.08.2025**
(21) Application number: 25156910.9
(22) Date of filing: 10.02.2025
(51) Int. Cl.: H04W 72/0453, H04W 16/14, H04W 16/02, H04W 16/10, H04W 88/08

(54) **BANDWIDTH SHARING BETWEEN CELLS**

(30) Priority: 23.02.2024 FI 20245232
(71) Applicant: Nokia Solutions and Networks Oy, 02610 Espoo (FI)
(72) Inventor: CIOLKOWSKI, Grzegorz, 55-120 Kuraszkow (PL); KOCH, Pawel, 52-311 Wroclaw (PL); MICHALAK, Marek, 55-114 Malin (PL)
(74) Representative: DREISS Patentanwälte PartG mbB

(57) **Abstract**

To enable two or more cells to dynamically share part of transmission bandwidth, the two or more cells are configured with a transmission bandwidth configuration per a cell, a transmission bandwidth configuration of a cell comprising a first bandwidth part dedicated for the cell in the transmission bandwidth and at least one second bandwidth part comprising transmission resources from a shared bandwidth section in the transmission bandwidth, wherein at least one second bandwidth part of the cell overlaps with at least one second bandwidth part of another cell. Non-overlapping bandwidth parts are assigned to the two or more cells according to transmission bandwidth configurations of the two or more cells; and at least an indication of the bandwidth part(s) assigned to a cell is transmitted to the corresponding cell, to be used for communication in the cell.

## Description

### TECHNICAL FIELD

Various example embodiments relate to wireless communications.

### BACKGROUND

Communication systems are under constant development. For example, 5G (fifth generation) introduced bandwidth parts. They enable more flexibility in how resources of a cell are assigned in a given carrier or a channel, for example. With bandwidth parts, the carrier, for example, can be subdivided and used for different purposes in the cell. It is desirable to provide solutions enabling flexibility to share bandwidth also between cells.

### SUMMARY

The independent claims define the scope.

According to a first aspect there is provided an apparatus comprising at least: means for configuring two or more cells with a transmission bandwidth configuration per a cell for a transmission bandwidth, a transmission bandwidth configuration of a cell comprising a first bandwidth part dedicated for the cell in the transmission bandwidth and at least one second bandwidth part comprising transmission resources from a shared bandwidth section in the transmission bandwidth, wherein at least one second bandwidth part of the cell overlaps with at least one second bandwidth part of another cell; means for assigning to the two or more cells from the transmission bandwidth non-overlapping bandwidth parts according to transmission bandwidth configurations of the two or more cells; and means for transmitting at least to one of the two or more cells, per a cell and per an assigned bandwidth part, at least an indication of the bandwidth part assigned to the cell amongst bandwidth parts in the transmission bandwidth configuration of the cell, to be used for communication in the cell.

In embodiments, the apparatus further comprises: means for providing said indication using identification information associated with the corresponding bandwidth part in the transmission bandwidth configuration of the cell, or using range of frequencies, or using one or more indexes of transmission resources in the bandwidth part assigned, or range of transmission resources in the bandwidth part assigned.

In embodiments, the apparatus further comprises means for determining, according to one or more preconfigured rules, when to reassign transmission bandwidth parts to at least one of the two or more cells, the means for determining causing the means for assigning to reassign non-overlapping transmission bandwidth parts.

In embodiments, the apparatus further comprises means for receiving traffic related information from at least one of the two or more cells, wherein the means for determining are configured to use the traffic related information.

In embodiments, the apparatus further comprises means for providing the indication of the bandwidth part assigned with timing information indicating at least a start time for the bandwidth part assigned.

In embodiments, the apparatus provides a near real time radio access network intelligent controller functionality and the indication is a command to a distributed unit responsible for performing radio access functionalities of the cell.

According to a second aspect there is provided an apparatus comprising at least: means for receiving from a first apparatus a transmission bandwidth configuration of a cell for a transmission bandwidth, the transmission bandwidth comprising a first bandwidth part and at least one second bandwidth part comprising transmission resources of the first bandwidth part and additional transmission resources from a shared bandwidth section in the transmission bandwidth; means for configuring second apparatuses connected to the cell with the transmission bandwidth configuration to be used for communication in the cell; means for receiving, from the first apparatus, an indication of one bandwidth parts assigned to the cell; means for informing, per a second apparatus, the second apparatus of a bandwidth part to be used amongst the one or more bandwidth parts assigned to the cell; and means for using the one or more bandwidth parts assigned to the cell for communication in the cell.

In embodiments, the means for using are configured to use the one or more bandwidth parts until a new indication of one or more bandwidth parts assigned to the cell is received.

In embodiments, when the indication further comprises timing information indicating at least a start time for a bandwidth part assigned, the means for informing the second apparatuses are configured to inform the start time to the second apparatuses using said bandwidth part, and the means for using are configured to start to use the bandwidth part at the indicated start time.

In embodiments, the apparatus is a distributed unit responsible for performing radio access functionalities of the cell and is configured to receive the indication as a command from a near real time radio access network intelligent controller.

In embodiments, a second bandwidth part comprises transmission resources of the first bandwidth part and additional transmission resources from the shared bandwidth section.

In embodiments, the first bandwidth part is an initial bandwidth part of the cell and the at least one second bandwidth part is a permitted transmission bandwidth of the cell when assigned to the cell.

In embodiments, the means comprise at least one processor and at least one memory storing instructions that, when executed by the at least one processor, cause the performance of the apparatus.

According to a third aspect there is provided a method comprising: configuring two or more cells with a transmission bandwidth configuration per a cell for a transmission bandwidth, a transmission bandwidth configuration of a cell comprising a first bandwidth part dedicated for the cell in the transmission bandwidth and at least one second bandwidth part comprising transmission resources from a shared bandwidth section in the transmission bandwidth, wherein at least one second bandwidth part of the cell overlaps with at least one second bandwidth part of another cell; assigning to the two or more cells from the transmission bandwidth non-overlapping bandwidth parts according to transmission bandwidth configurations of the two or more cells; and transmitting at least to one of the two or more cells, per a cell and per an assigned bandwidth part, at least an indication of the bandwidth part assigned to the cell amongst bandwidth parts in the transmission bandwidth configuration of the cell, to be used for communication in the cell.

According to a fourth aspect there is provided a method comprising: receiving from a first apparatus a transmission bandwidth configuration of a cell for a transmission bandwidth, the transmission bandwidth comprising a first bandwidth part and at least one second bandwidth part comprising transmission resources of the first bandwidth part and additional transmission resources from a shared bandwidth section in the transmission bandwidth; configuring second apparatuses connected to the cell with the transmission bandwidth configuration to be used for communication in the cell; receiving, from the first apparatus, an indication of one bandwidth parts assigned to the cell; informing, per a second apparatus, the second apparatus of a bandwidth part to be used amongst the one or more bandwidth parts assigned to the cell; and using the one or more bandwidth parts assigned to the cell for communication in the cell.

According to a fifth aspect there is provided a computer readable medium comprising program instructions which, when executed by an apparatus, cause the apparatus to perform at least one of a first process, or a second process, wherein the first process comprises at least: configuring two or more cells with a transmission bandwidth configuration per a cell for a transmission bandwidth, a transmission bandwidth configuration of a cell comprising a first bandwidth part dedicated for the cell in the transmission bandwidth and at least one second bandwidth part comprising transmission resources from a shared bandwidth section in the transmission bandwidth, wherein at least one second bandwidth part of the cell overlaps with at least one second bandwidth part of another cell; assigning to the two or more cells from the transmission bandwidth non-overlapping bandwidth parts according to transmission bandwidth configurations of the two or more cells; and transmitting at least to one of the two or more cells, per a cell and per an assigned bandwidth part, at least an indication of the bandwidth part assigned to the cell amongst bandwidth parts in the transmission bandwidth configuration of the cell, to be used for communication in the cell, and wherein the second process comprises at least: receiving from a first apparatus a transmission bandwidth configuration of a cell for a transmission bandwidth, the transmission bandwidth comprising a first bandwidth part and at least one second bandwidth part comprising transmission resources of the first bandwidth part and additional transmission resources from a shared bandwidth section in the transmission bandwidth; configuring second apparatuses connected to the cell with the transmission bandwidth configuration to be used for communication in the cell; receiving, from the first apparatus, an indication of one bandwidth parts assigned to the cell; informing, per a second apparatus, the second apparatus of a bandwidth part to be used amongst the one or more bandwidth parts assigned to the cell; and using the one or more bandwidth parts assigned to the cell for communication in the cell.

In an embodiment, the computer readable medium is a non-transitory computer readable medium.

According to a sixth aspect there is provided a computer program comprising instructions which, when executed by an apparatus, cause the apparatus to perform at least one of a first process, or a second process, wherein the first process comprises at least: configuring two or more cells with a transmission bandwidth configuration per a cell for a transmission bandwidth, a transmission bandwidth configuration of a cell comprising a first bandwidth part dedicated for the cell in the transmission bandwidth and at least one second bandwidth part comprising transmission resources from a shared bandwidth section in the transmission bandwidth, wherein at least one second bandwidth part of the cell overlaps with at least one second bandwidth part of another cell; assigning to the two or more cells from the transmission bandwidth non-overlapping bandwidth parts according to transmission bandwidth configurations of the two or more cells; and transmitting at least to one of the two or more cells, per a cell and per an assigned bandwidth part, at least an indication of the bandwidth part assigned to the cell amongst bandwidth parts in the transmission bandwidth configuration of the cell, to be used for communication in the cell, and wherein the second process comprises at least: receiving from a first apparatus a transmission bandwidth configuration of a cell for a transmission bandwidth, the transmission bandwidth comprising a first bandwidth part and at least one second bandwidth part comprising transmission resources of the first bandwidth part and additional transmission resources from a shared bandwidth section in the transmission bandwidth; configuring second apparatuses connected to the cell with the transmission bandwidth configuration to be used for communication in the cell; receiving, from the first apparatus, an indication of one bandwidth parts assigned to the cell; informing, per a second apparatus, the second apparatus of a bandwidth part to be used amongst the one or more bandwidth parts assigned to the cell; and using the one or more bandwidth parts assigned to the cell for communication in the cell.

### BRIEF DESCRIPTION OF DRAWINGS

Embodiments are described below, by way of example only, with reference to the accompanying drawings, in which
Fig. 1 illustrates an exemplified high-level network architecture;
Fig. 2 illustrates an example of a transmission bandwidth;
Fig. 3 illustrates an example functionality;
Fig. 4 illustrates an example functionality;
Fig. 5 illustrates an example of transmission bandwidth configurations;
Fig. 6 illustrates an example of information exchange;
Fig. 7 is a schematic block diagram;
Fig. 8 is a schematic block diagram;
Fig. 9 is a schematic block diagram; and
Fig. 10 is a schematic block diagram.

### DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the structural elements are not restricted by the terms. The terms are used merely for the purpose of distinguishing an element from other elements. For example, a first element could be termed a second element, and similarly, a second element could be also termed a first element without departing from the scope of the present disclosure.

5G (fifth generation), 5G-Advanced, and beyond future wireless networks, aim to support a large variety of services, use cases and industrial verticals, for example unmanned mobility with fully autonomous connected vehicles, other vehicle-to-everything (V2X) services, or smart environment, e.g. smart industry, smart power grid, or smart city, just to name few examples. To provide variety of services with different requirements, such as enhanced mobile broadband, ultra-reliable low latency communication, massive machine type communication, wireless networks are envisaged to adopt network slicing, flexible decentralized and/or distributed computing systems and ubiquitous computing, with local spectrum licensing, spectrum sharing, infrastructure sharing, and intelligent automated management underpinned by mobile edge computing, artificial intelligence, for example machine learning, based tools, cloudification, short-packet communication, and blockchain technologies. For example, in the network slicing multiple independent and dedicated network slice instances may be created within the same infrastructure to run services that have different requirements on latency, reliability, throughput and mobility.

It is envisaged that key features of 6G (sixth generation) will include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

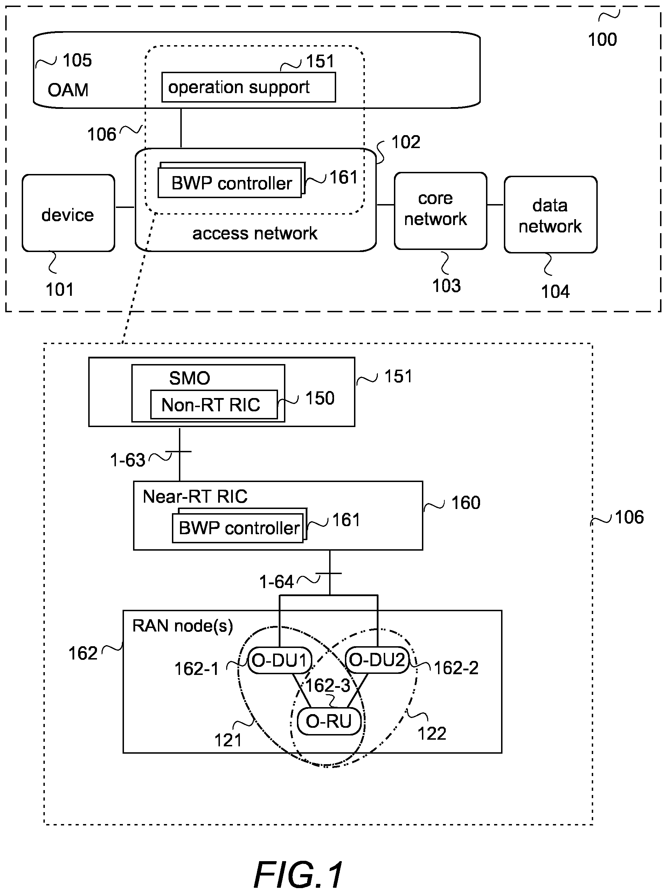

Fig. 1 illustrates an exemplified high-level cloud-native data-driven service-based network architecture only showing some functional entities, all being logical units, whose implementation may differ from what is shown. The connections shown in Fig. 1 are logical connections; the actual physical connections may be different. Further, is should be appreciated that only some operational entities and components, with a non-limiting example of their mapping, are disclosed.

The system 100 depicted in Fig. 1 is based on the 5G system (fifth generation system). The examples are described herein using principles and terminology of 5G without limiting the examples, and the terminology used to the 5G. A person skilled in the art may apply the solutions and examples to other communication systems, for example beyond 5G, e.g. 6G, 7G, provided with necessary properties. In 5G, components (elements, functional units) of service based architecture are defined using network functions that may be cloudified network functions. A network function supports or hosts a collection of services and offers one or more services to other network functions in the network. The network functions may be deployed as microservices. A service consumer, or shortly a consumer, is a network function requesting, or subscribing, a service from another network function, which is a service producer, or shortly a producer, that provides the service as a reply (response) or a notification.

Referring to Fig. 1, a wireless network 100, or a system comprising wireless networks, comprises device components 101 for device functionalities in device domain(s), access network components 102 for access network functionalities in access network domain(s), core network components 103 for core network functionalities in core network domain(s), data network components 104 for data network functionalities in data network domain(s), and an operations, administration and management (OAM) components 105 in an OAM domain for component/domain management, operation support system 151 functionalities and orchestration on various levels.

A device component 101 may be any electrical device, or apparatus, connectable to an access network and configurable to be in a wireless connection on one or more bandwidth parts of one or more communication channels, including one or more control channels, with an access network component 102 providing a cell, for example. The physical link from the device component 101 to the access network component 102 towards the core network component 103 is called an uplink or a reverse link and the physical link to the device component is called a downlink or a forward link. By way of example rather than limitation, the device component 101 may referred to as a mobile apparatus, a terminal device, a communication device, a user equipment (UE), a subscriber station (SS), a portable subscriber station, a mobile station (MS), or an access terminal (AT). A non-limiting lists of examples of the device component 101, or what the device component 101 may comprise or be comprised in, include a mobile phone, a cellular phone, a smart phone, a voice over internet protocol (VoIP) phone, a wireless local loop phone, a device using a wireless modem, a portable computer, a desktop computer, laptop-embedded equipment (LEE), laptop-mounted equipment (LME), a smart device, a multimedia device, an image capture terminal device, such as a digital camera, a gaming terminal device, a music storage and playback appliance, a drone, a vehicle, an automated guided vehicle, an autonomous connected vehicle, a vehicle-mounted wireless terminal device, a wireless endpoint, an internet of things device, an industrial internet of things device, a device operating in an automated processing chain and/or an industrial contexts, a consumer electronics device, a consumer internet of things device, a mobile robot, a mobile robot arm, a sensor, a surveillance camera, an eHealth related device, a medical monitoring device, a medical device, for example for remote surgery, a wearable device, such as a smart watch, a smart ring, a head-mounted display (HMD), an on-person device, etc. The device component may also be part of a group of device components seen as one device component, i.e. one connected apparatus, by the wireless network.

An access network domain may be based on any kind of an access network, such as a cellular access network, for example 5G network, 5G-Advanced network, 6G network, etc., a non-terrestrial network, a legacy cellular radio access network, for example 4G or older generation network, or a non-cellular access network, for example a wireless local area network, or any combination thereof. To provide the wireless access, the access network comprises access network components 102, such as access network apparatuses, or access devices, radio access network elements, or radio access network nodes. An access device component 102 may provide one or more cells, possibly with different cell accessibility per a cell, but a cell is provided by one access device. However, there may be overlapping cells, for example a macro cell provided by an access device operating in co-operation of access nodes providing smaller cells, such as micro-, femto- or picocells, which overlap at least partly within the macro cell. There are a wide variety of access network components 102. A non-limiting lists of examples of the access network component 102, or what the access network component 102 may comprise or be comprised in, include different types of base stations, such as eNBs, gNBs, split gNBs, transmission-reception points, network-controlled repeaters, nodes operationally coupled to one or more remote radio heads, satellites, donor nodes in integrated access and backhaul (IAB), fixed IAB nodes, mobile IAB nodes mounted on vehicles, for example, etc.

Further, it should be noted that some of the components may be multi-domain components. For example a device component 101 may also provide services to other device components, i.e. operate also as an access network component 102, for example be a relay node, or a mobile IAB node, or a mobile termination part in an IAB node.

To support flexible spectrum sharing, 5G cellular access networks, 5G-Advanced, 6G networks, etc. support bandwidth adaptation which allows to split a wide bandwidth of a cell into smaller parts. A bandwidth part BWP is a designated portion of consecutive transmission/reception resources that are a subset of transmission/reception resources, e.g. resource blocks, of a channel bandwidth, or a carrier bandwidth. In other words, it represents a subset of the total available spectrum in a transmission bandwidth of a channel or carrier, and herein the term "transmission bandwidth" covers both bandwidth for transmission and bandwidth for reception. Device components, for example user equipments, can currently be configured to work with up to four separate downlink BWPs and up to four uplink BWPs for each serving cell, i.e. for each cell a device component is connected to, and amongst the configured BWPs an actual BWP to be used for transmission is indicated to the device component(s). This offers flexibility in managing different communication streams and optimizing spectrum usage. Further, since a device component does not have to monitor the entire bandwidth of the cell but rather specific bandwidth part(s), the bandwidth adaptation allows more efficient operation of the device component. For example, a device component may utilize a wider bandwidth when high data rates are necessary and switch to a narrower bandwidth during periods of lower activity, reducing energy usage. Further, BWPs enable device components with varying bandwidth capabilities to coexist within the access network by assigning resources that match the devices' capabilities.

The core network components 103 form one or more core networks. A core network may be based on a non-standalone core network, for example an LTE-based network, or a standalone access network, for example a 5G core network. However, it should be appreciated that the core network, and the core network components 103, may use any technology that enable network services to be delivered between devices and data networks.

A data network may be any network, like the internet, an intranet, a wide area network, etc. Different remote monitoring and/or data collection services for different use cases may be reached via the data network and the data network components 104.

It is envisaged, as illustrated in Fig. 1, that an open radio access network (open RAN, O-RAN) platform 106 is used for software-defined implementation of radio access networks. The purpose of the open radio access platform 106 is to interact and guide the behavior of the radio access network, for example radio access network nodes (access network components) in the radio access network. The open radio access network platform 106 may be implemented based on architecture defined by the O-RAN ALLIANCE, in which the open radio platform is called a radio intelligent controller (RIC). Fig. 1 illustrates an exemplified high-level open radio access network architecture 106.

In the example of Fig. 1, the radio intelligent controller comprises a non-real-time part RIC (non-RT RIC) 150 and a near-real-time part RIC (near-RT RIC) 160. The non-real-time part 150 may be part of the service management and orchestration, SMO, framework, in the operation support system 151 in the operation and maintenance domain 105 and the near-real-time part 160 may be on a radio access side in the access network domain. The non-RT RIC 150 manages events and resources with a response time of one second or more. The near-RT RIC 160 manages events and resources requiring a faster response down to 10 milliseconds (ms). The non-RT RIC 150 can be deployed centrally, while the near-RT RIC 160 can be deployed centrally or on the network edge.

The non-RT RIC 150 is a platform for hosting micro-service-based applications called rApps. The non-RT RIC functionality may include configuration management, device management, fault management, performance management, and lifecycle management for all network elements in the network, across different access types, e.g. macro cells, massive MIMO, small cells. In other words, the non-RT RIC is to support non-real-time intelligent radio resource management, higher layer procedure optimization, policy optimization in radio access network, and providing AI/ML (artificial intelligence/machine learning) models to the near-RT RIC 160. The non-RT RIC 150 can use data analytics and AI/ML training/inference to determine the radio access network optimization actions for which it can leverage SMO services such as data collection and provisioning services of nodes 162 in the O-RAN. The AI/ML model training may be performed in the non-RT RIC as offline training.

The near-RT RIC 160 is a near-real-time, micro-service-based software platform for hosting micro-service-based applications called xApps for providing RIC platform services and can interact with the RIC via application programming interfaces (APIs). xApps can also exchange information between them, enabling to build sophisticated use cases leveraging the capabilities of multiple xApps. In other words, the near-RT RIC software platform provides xApps cloud-based infrastructure for controlling in an area access network components 102 as radio access network logical nodes 162. The near-RT RIC 160 may use AI/ML models for inference to determine optimization actions, and the near-RT RIC 160 may further online train an AI/ML model.

To control dynamic transmission bandwidth sharing between different cells 121, 122, bandwidth part, BWP, controllers 161 are introduced. The BWP controllers may be applications (xApp) running in the near-RT-RIC 160.

This control of bandwidth parts may utilize A1 interface 1-63 connecting the non-near-RT RIC 150 to the near-RT RIC 160, and E2 interface 1-64 connecting the near-RT RIC 150 with RAN units. The A1 interface is a declarative policy interface, for conveying service level policies, which are used to control radio network resource usage to reach a desired service performance level: quality of service target, quality of experience target, traffic preferences, quality of service optimization with resource directive, quality of experience optimization with resource directive, user equipment level target, slice service-level agreement target and load balancing. It should be appreciated that the list is a non-limiting list of examples. The E2 interface is an open interface for forwarding measurements from open RAN distributed units, O-DUs 162a1 162a2, to the near-RT RIC 160, and different commands, e.g. configuration commands or assignment commands, to the O-DUs.

In the O-RAN, a RAN node 162 providing two or more cells 121, 122 sharing transmission bandwidth as will be explained below, may be a split node having one or more O-DUs 162-1, 162-2, connected to one or more shared open RAN radio units O-RUs 162-3. The O-RU is involved in establishing physical layer connections to device components, i.e. to connected apparatuses, and comprises different radio frequency processing components, for example. The O-DU is responsible for performing radio access functionalities of a cell, or two or more cells, for example responsible for higher level processing functions at the physical layer, for the medium access layer functionalities and for the radio link control layer functionalities. The O-DUs can be virtualized on white box servers at the edge (with hardware acceleration for some of the physical layer functionalities), while the O-RUs can be generally implemented on Field Programmable Gate Arrays (FPGAs) and Application-specific Integrated Circuits (ASICs) boards and deployed close to antennas.

In the example of Fig. 1, the two cells 121, 122 may belong to different operators wanting to share part of the spectrum (transmission bandwidth). It may be that the O-DUs are handling different types of traffic, for example one O-DU 162-1 may be handling broadband traffic while the other O-DU 162-2 is handling IoT communication. A further example include that one of the O-DUs 162-1, 162-2 may be dedicated to serve mission critical traffic. It should be appreciated that the above are non-limiting examples.

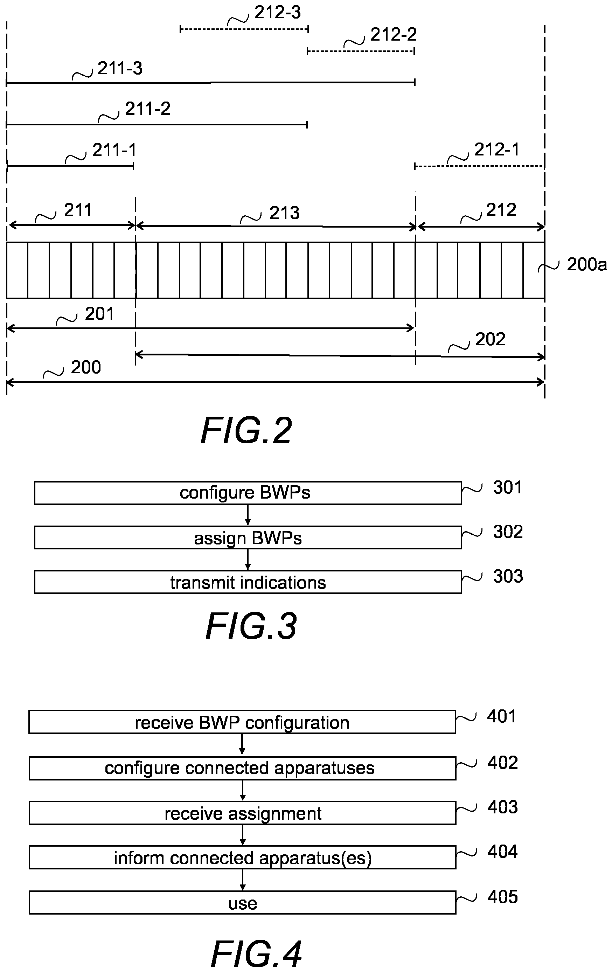

Fig. 2 illustrates an example of a transmission bandwidth of a channel that is shared by two or more cells. In the examples below two cells, cell#1 and cell#2, are used for the sake of clarity of description.

Referring to Fig. 2, the transmission bandwidth 200, or a transmission bandwidth configuration of a channel, comprises different sections formed by resource blocks 200a, a dedicated section per a cell sharing the bandwidth, and one or more shared sections. In the example of Fig. 2, there is a dedicated section 211 for the cell#1, a dedicated second 212 for the cell#2, and one shared section 213 for both cells. Within the dedicated section only the cell can transmit, whereas within the shared section cells sharing the section can transmit, but with a limitation that a resource block in the shared section can be used by one cell at a time. Hence, the maximum bandwidth 201 for the cell#1 overlaps with the maximum bandwidth 202 for the cell#2 in the area of the shared section 213. It should be appreciated that an initial bandwidth part, BWP, of a cell should be completely confined within the dedicated section of the transmission bandwidth of that cell.

In the example of Fig 2, a transmission bandwidth configuration of the cell#1 comprises three transmission bandwidth parts: a first bandwidth part 211-1 dedicated for the cell#1 in the transmission bandwidth 200 and two second bandwidth parts 211-2, 211-3, both comprising transmission resources of the first bandwidth part and additional transmission resources from the shared bandwidth section 213 in the transmission bandwidth. In the example of Fig. 2, both of the second bandwidth part s 211-2, 211-3 of the cell#1 overlaps with at least one second bandwidth part of the cell#2. More precisely, the bandwidth part 211-2 overlaps with a bandwidth part 212-3 and the bandwidth part 211-3 overlaps with the bandwidth parts 212-2 and 212-3.

In the example of Fig. 2, a transmission bandwidth configuration of the cell#2 comprises also three bandwidth parts: a first bandwidth part 212-1 dedicated for the cell#2 and two second bandwidth parts 212-2, 212-3 comprising transmission resources from the shared bandwidth section 213 in the transmission bandwidth 200. In the example of Fig. 2, the two second bandwidth parts of the cell#2 do not overlap with each other and neither with the first bandwidth part 212-1, but the second bandwidth part 212-2 overlaps with the second bandwidth part 211-3 of the cell#1, and the second bandwidth part 212-3 overlaps with the second bandwidth parts 211-2 and 211-3 of the cell#1. It should be appreciated that the bandwidth part configurations are mere examples, and may be configured differently, including different number of second bandwidth parts to cells, as long as at least one second bandwidth part of a cell overlaps with at least one second bandwidth part of another cell. A second bandwidth part is a permitted transmission bandwidth of a cell when assigned, i.e. allocated, to the cell.

As can be seen from the example of Fig. 2, bandwidth parts 212-1, 212-2, 212-3 of a cell doesn't have to cover entire transmission bandwidth 202 of the cell i.e. part of the cell's transmission bandwidth can be not covered by any bandwidth part.

A bandwidth part within which a cell is allowed to perform radio communication may be called an actual transmission bandwidth. The actual transmission bandwidth comprises the first bandwidth part and the second bandwidth parts that are assigned (allocated) to the cell, when one or more second bandwidth parts are assigned to the cell. It may be that no second bandwidth parts are assigned (allocated) to the cell, resulting that the actual bandwidth part is within the first bandwidth part.

Fig. 3 is a flowchart illustrating a non-limiting example functionality of an apparatus configuring and assigning bandwidth parts to cells. The apparatus may be an apparatus that provides a near-real time radio access network intelligent controller functionality, i.e. the near-RT RIC.

Referring to Fig. 3, the process starts by configuring (block 301) two or more cells with a transmission bandwidth configuration per a cell for a transmission bandwidth, for example as described above with Fig. 2. In other words, a transmission bandwidth configuration of a cell comprises a first bandwidth part dedicated for the cell in the transmission bandwidth and at least one second bandwidth part comprising transmission resources from a shared bandwidth section in the transmission bandwidth, wherein at least one second bandwidth part of the cell overlaps with at least one second bandwidth part of another cell. A second bandwidth part may comprise transmission resources of the first bandwidth part and additional transmission resources from the shared bandwidth section.

Depending on an implementation, the apparatus may determine the transmission bandwidth configurations or receive them, for example from the operation support system, e.g from the non-real time RIC.

When the two or more cells are configured with corresponding transmission configurations, bandwidth parts to the two or more cells are assigned (block 302), or allocated. More precisely, non-overlapping bandwidth parts according to transmission bandwidth configurations of the two or more cells are assigned to the cells. The first bandwidth part, or initial bandwidth part within the first bandwidth part, will be always assigned to a cell, and at any point of time, one transmission resource block may only be assigned (allocated) to one cell. It may be that no second bandwidth part is assigned to the cell, or to none of the two or more cells. The non-overlapping bandwidth parts means bandwidth parts of different cells, bandwidth parts of the same cell may overlap. For example, using the example of Fig. 2, assigned, or usable, bandwidth parts may be:
211-1, 212-3 and 212-1, or
211-1, 212-3, 212-2 and 212-1, or
211-1, 211-2, 212-2, and 212-1, or
211-1, 211-2, 211-3, and 212-1, or
211-1, 211-3, and 212-1, or
211-1, 211-2, and 212-1, or
211-2 (implicitly including 211-1), 211-3 (implicitly including 211-1) and 212-1, or
211-1 and 212-1 (i.e. no shared bandwidth parts assigned), or
211-2 (implicitly including 211-1) and 212-1, or
211-3 (implicitly including 211-1 and 211-2) and 212-1.

As can be seen from the above example, the disclosed way to assign bandwidth parts ensures that the two or more cells do not collide on the transmission bandwidth. It should be appreciated that an indication indicating assigned bandwidth parts may include an explicit indication of a dedicated bandwidth part as an assigned bandwidth part, or the indication indicates explicitly only the shared bandwidth part(s) (if none assigned, an empty indication, or indication indicating none, may be used). Hence, the dedicated bandwidth part may be interpreted to be an always assigned bandwidth part, even though it is not specifically assigned.

In other words, the resource blocks of the shared transmission bandwidth section(s) can be dynamically assigned/allocated to one of the cells, and the second bandwidth parts, even when configured, may not be utilized. This enables energy consumption savings while not sacrificing service quality.

The assigning may be performed based on one or more rules, the rules including different (pre)configured policies. A non-limiting list of rules that may be used include:
When the two cells belong to different operators, the bandwidth parts are assigned to the cells based on the operator's need for resources, for example based on current reported traffic, and agreed sharing policies between the operators.

When the two cells are handling different type of traffic, the bandwidth parts may be assigned based on specific traffic needs of the types in the cells.

When one of the cells is dedicated to serve traffic related to public safety e.g. mission critical traffic of government services, the bandwidth parts are then assigned to mission critical traffic on need basis and used by public network otherwise.

When the bandwidth parts are assigned to the two or more cells, the two or more cells are informed correspondingly. In other words, at least an indication of a bandwidth part assigned (allocated) to a cell amongst bandwidth parts in the transmission bandwidth configuration of the cell, is transmitted (block 303) to the cell, to be used for communication in the cell. This transmitting is performed at least to the cells whose previous bandwidth part assignment was changed, but it may be performed to all the two or more cells, regardless whether or not the bandwidth part assignment changed.

Said indication may be provided using identification information, for example an identifier associated with the corresponding bandwidth part in the transmission bandwidth configuration of the cell, or using range of frequencies, or using one or more indexes of transmission resources in the bandwidth part assigned, or range of transmission resources in the bandwidth part assigned.

It may be that also timing information indicating at least a start time for the bandwidth part assigned is transmitted, for example the indication may be provided with the timing information. The timing information may indicate a start slot, for example.

The assigning and transmitting at least the indication may be performed at certain time intervals, or based on traffic or estimated future traffic. For example, the near-RT RIC may overwatch the utilization of the one or more shared transmission bandwidth sections, and decide in a near real-time manner to reassign the bandwidth parts between the cells.

Fig. 4 is a flowchart illustrating a non-limiting example functionality of an apparatus responsible for performing at least radio access functionalities of a cell towards connected apparatuses in the cell. The apparatus may be an apparatus that provides open radio access network distribute unit (O-DU) functionality, configured to receive different commands from a near-real time radio access network intelligent controller (near-RT RIC).

Referring to Fig. 4, a transmission bandwidth configuration of a cell for a transmission bandwidth is received (block 401). The transmission bandwidth configuration comprises a first bandwidth part and at least one second bandwidth part, different examples of which are described above.

The apparatus configures (block 402) second apparatuses, that are apparatuses (device components) connected to the cell, with the transmission bandwidth configuration to be used for communication in the cell. It should be appreciated that a second apparatus may be configured with a subset of the transmission bandwidth configurations received in block 401. Further, the configuring may be performed when a second apparatus connects to the cell.

The apparatus further receives (block 403) at least an indication which bandwidth parts are assigned to the cell. As described above, the first bandwidth part, i.e. its resources, is always assigned to the cell, either implicitly or explicitly.

In the illustrated example of Fig. 4, connected apparatuses are informed (block 404) of the indicated bandwidth parts. In an implementation, only a subset of connected apparatuses may be informed, the subset comprising apparatuses whose BWP in use will change because of the bandwidth part(s) indicated as assigned to the cell. However, no reconfiguration of the connected apparatus(es) is needed.

Further, the apparatus uses (block 405) the bandwidth part(s) assigned to the cell for communication in the cell at least until a new indication of bandwidth part(s) assigned to the cell is received, in which case the process has returned to block 403 and continues there as described above.

When the indication further comprises timing information indicating at least a start time for the bandwidth part(s) assigned, the apparatus starts to use the bandwidth part(s) assigned at the indicated start time, e.g. at the beginning of an indicated slot.

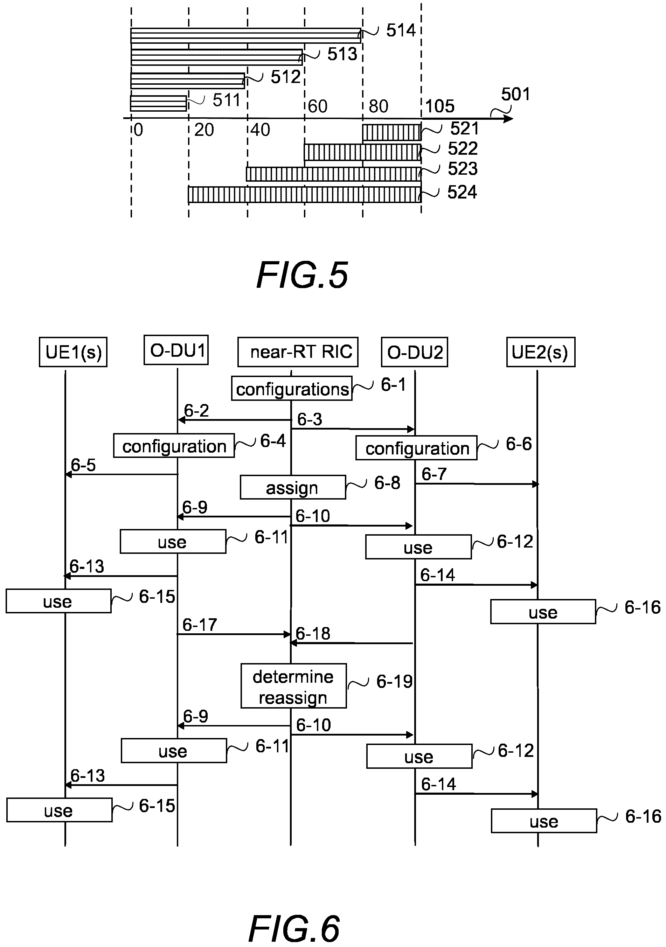

Fig. 5 illustrates an example of transmission bandwidth configurations for information exchange example illustrated in Fig. 6. In the examples it is assumed that O-DU1 is serving cell#1 to which one or more user equipments UE1(s) are connected, O-DU2 is serving a cell#2 to which one or more user equipments UE2 (s) are connected, and the near-RT-RIC performs the configurations and assignments.

In the example, both cells are configured with 15kHz subcarrier spacing and 20MHz channel bandwidth which provides 106 resources, i.e. resource blocks, RBs, or transmission bandwidth of the channel. The transmission bandwidth is divided in the example into three sections: a section dedicated to Cell#1 is in RB range [0..19], a section dedicated to Cell#2 is in RB range [80..106] and the shared section is 60RBs in range [20..79].

In the example, the cell#1 is configured with 4 bandwidth parts as follows:
- BWP#1, which is the first bandwidth part 511: startRB: 0, number of RBs: 20
- BWP#2, which is a second bandwidth part 512: startRB: 0, number of RBs: 40
- BWP#3, which is another second bandwidth part 513: startRB: 0, number of RBs: 60
- BWP#4, which is a further second bandwidth part 514: startRB: 0, number of RBs: 80

In the example, the cell#2 is configured with 4 bandwidth parts as follows:
- BWP#1, which is the first bandwidth part 521: startRB: 80, number of RBs: 26
- BWP#2, which is a second bandwidth part 522: startRB: 60, number of RBs: 46
- BWP#3, which is another second bandwidth part 523: startRB: 40, number of RBs: 66
- BWP#4, which is a further second bandwidth part 524: startRB: 20, number of RBs: 86

Referring to Fig. 6, the near-RT RIC determines (block 6-1) the above configurations, and configures the O-DU1 by transmitting in message 6-2 configurations of the cell#1, and correspondingly configures the O-DU2 by transmitting in message 6-3 configurations of the cell#2. Messages 6-2 and 6-3 may be configuration commands. The O-DU1 receives the transmission band configuration and stores (block 6-4) the configuration. The O-DU2 receives the transmission band configuration and stores (block 6-6) the configuration.

In the illustrated example of Fig. 6, it is assumed, for the sake of clarity, that connected user equipments are configured with corresponding bandwidth parts. Hence, the O-DU1 configures the UE1(s) by transmitting in messages 6-5 configurations of the cell#1, and correspondingly the O-DU2 configures the UE2(s) by transmitting in messages 6-7 configurations of the cell#2. Messages 6-5 and 6-7 may be Radio Resource Control (RRC) protocol messages.

Further, the near-RT RIC assigns (block 6-8) one or more bandwidth parts to the cell#1 and to the cell#2, for example as described above.

The assignments may be one of the following (it should be appreciated that the list is not covering all possible combinations of non-overlapping bandwidth part assignments:
1. The near-RT RIC doesn't allow cells to use the shared transmission bandwidth at all. Both cells can only use their BWP#1, because it is completely confined within the dedicated section of corresponding cell's transmission bandwidth.
2. The near-RT RIC allows Cell#1 to use RBs in range [20..49] and Cell#2 to use RBs in range [50..79]. In other words, this means that Cell#1 is assigned and can use its BWP#1 and BWP#2 while Cell#2 is assigned and can use its BWP#1 and BWP#2.
3. The near-RT RIC allows Cell#1 to use RBs in range [20..59] and Cell#2 to use RBs in range [60..79]. In other words, this means that Cell#1 is assigned and can use its BWP#1, BWP#2 and BWP#3 while Cell#2 is assigned and can use its BWP#1 and BWP#2.
4. The near-RT RIC allows Cell#1 to use RBs in range [20..79] and do not let Cell#2 to use shared transmission bandwidth at all. In other words, this means that Cell#1 is allowed to use all the BWPs, i.e. its its BWP#1, BWP#2, BWP#3 and BWP#4 are assigned, while Cell#2 can only use BWP#1, and it is the only assigned bandwidth part.

After assigning the one or more bandwidth parts, the near-RT RIC transmits at least an indication of the one or more bandwidth parts to be used in the corresponding cells in message 6-9 to the O-DU1 and in message 6-10 to the O-DU2, which then take the bandwidth parts in use (block 6-11 and block 6-12). Messages 6-9 and 6-10 may be an indication command, or an assignment command.

The O-DU1 may indicate, by transmitting message(s) 6-13 to one or more of the UE1(s), which one of the configured bandwidth part the UE1 is to use (block 6-15), the indicated bandwidth part being one of the bandwidth parts indicated in message 6-9. Correspondingly, the O-DU2 may indicate by transmitting message(s) 6-14 to one or more of the UE2(s) which one of the configured bandwidth part the UE2 is to use (block 6-16), the indicated bandwidth part being one of the bandwidth parts indicated in message 6-10. The indication in messages 6-13, 6-14 may be sent in downlink control information signaling.

In the illustrated example of Fig. 6, the O-DU1 and the O-DU2 are configured to transmit (messages 6-17, 6-18) traffic related information, the O-DU1 traffic related information of the cell#1, and the O-DU2 traffic related information of the cell#2, to the near-RT RIC. Messages 6-17, 6-18 may be reports.

In the illustrated example of Fig. 6, it is assumed, that based on the received traffic related information (and preconfigured rules (policy) to be applied), the near-RT RIC determines (block 6-19) that reassigning of the bandwidth parts is needed, and reassigns (block 6-19) the bandwidth parts based on the transmission bandwidth configuration.

After reassigning the one or more bandwidth parts, the near-RT RIC transmits at least an indication of the one or more bandwidth parts to be used in the corresponding cells in message 6-9 to the O-DU1 and in message 6-10 to the O-DU2, which then take the bandwidth parts in use (block 6-11 and block 6-12), as described above. In an implementation, if reassigning result to the same assignment of bandwidth parts to a cell, an indication may not be transmitted. For example, if in block 6-8, the cell#1 was assigned with BWP#1, and the cell#2 was assigned with BWP#1, and the reassignment in block 6-19 results that the cell#1 is assigned with BWP#1 and BWP#2, and the cell#2 is assigned with BWP#1 (i.e. no change), transmitting the indication (message 6-10) to the O-DU2 may be omitted.

The process then continues as described above. The O-DU1 may indicate, by transmitting message(s) 6-13 to one or more of the UE1(s), which one of the configured bandwidth part the UE1 is to use (block 6-15), the indicated bandwidth part being one of the bandwidth parts indicated in message 6-9. Correspondingly, the O-DU2 may indicate by transmitting message(s) 6-14 to one or more of the UE2(s) which one of the configured bandwidth part the UE2 is to use (block 6-16), the indicated bandwidth part being one of the bandwidth parts indicated in message 6-10. The indication in messages 6-13, 6-14 may be sent in downlink control information signaling.

As can be seen, bandwidth parts used in one or more cells may be dynamically adjusted, by preconfiguring different bandwidth parts in advance and then simply indicating which one(s) to use, without reconfiguring the two or more cells. When two cells collide with each other, reconfiguring the two cells must be performed synchronously, including deactivation of affected cells, when bandwidth parts are affected, and re-activation of those with new configurations. Deactivation means that connected user equipments (connected apparatuses) will be dropped. Hence, the disclosed solution is seamless from the user equipment perspective. Furthermore, reconfiguration of the cell(s), and user equipments, is a slow process, increases energy consumption at the user equipments, and may take multiple seconds or even minutes, whereas the disclosed solution is much faster and allows to adjust the transmission bandwidth within milliseconds, without breaks in service i.e. without cell reconfiguration of RRC reconfiguration towards the user equipments and without extra energy consumption (i.e. energy consumption needed during reconfiguration).

Further, since the process is much faster, it enables use of smaller bandwidth portions whenever possible, thereby further reducing power consumption.

Even though in the above the examples and implementations are using two cells sharing a transmission bandwidth, it should be appreciated that the examples and implementations may be used as well in cases, when there are more than two cells sharing the transmission bandwidth, or more than one transmission bandwidth is shared by the two or more cells.

The blocks and related functions and information exchange described above by means of Fig. 1 to Fig. 6 are in no absolute chronological order, and some of them may be performed simultaneously or in an order differing from the given one. Other functions can also be executed between them or within them, and other information may be transmitted, and/or other rules applied. Some of the blocks or part of the blocks or one or more pieces of information can also be left out or replaced by a corresponding block or part of the block or one or more pieces of information. Furthermore, some of the blocks in one example may be combined with another example.

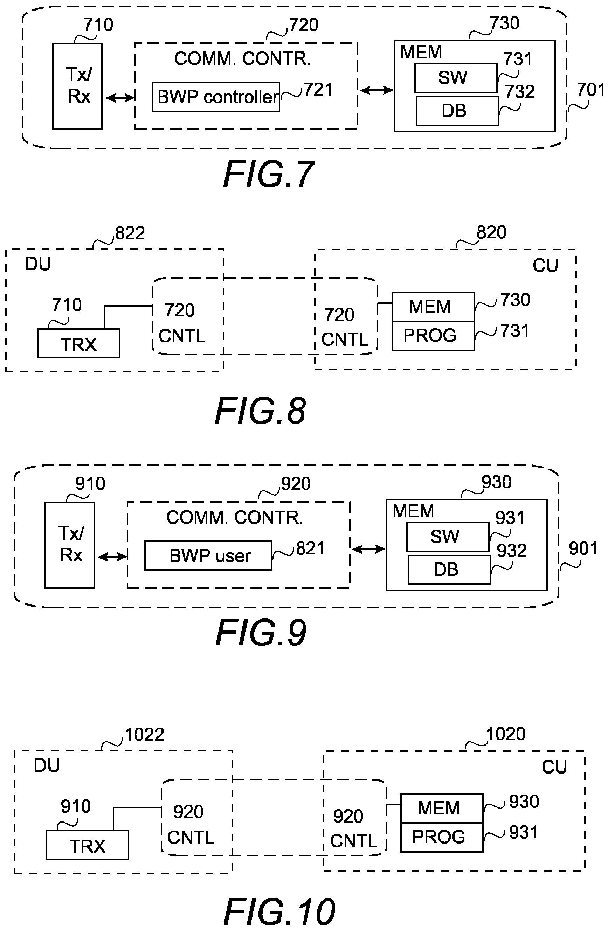

Fig. 7 illustrates an apparatus 701 according to some embodiments. The apparatus 701 may be any apparatus, or electronic device, that may be configured to configure and assign bandwidth parts to cells, for example perform any corresponding functionality described herein with the near-RT-RIC. Different examples of such apparatuses are described above. Fig. 8 illustrates an apparatus that may implement distributed functionality of the apparatus illustrated in Fig. 7.

Fig. 9 illustrates an apparatus 901 according to some embodiments. The apparatus 901 may be any apparatus, or electronic device, that may be configured to perform at least radio access functionalities of a cell towards device components, for example perform any corresponding functionality described herein with the O-DU. Different examples of such apparatuses are described above. Fig. 10 illustrates an apparatus that may implement distributed functionality of the apparatus illustrated in Fig. 9.

The apparatus 701, 901 may comprise one or more communication control circuitries 720, 920, such as at least one processor, and at least one memory 730, 930 including one or more algorithms 731, 931, such as a computer program code (software, SW, or instructions) wherein the at least one memory and the computer program code (software) are configured, with the at least one processor, to cause the apparatus to carry out any one of the exemplified functionalities of a corresponding apparatus, described above with any of Fig. 1 to Fig. 6. Said at least one memory 730, 930 may also comprise at least one database (DB) 732, 932.

According to an embodiment, there is provided an apparatus comprising at least one processor and at least one memory storing instructions that, when executed by the at least one processor, cause the apparatus at least to: configure two or more cells with a transmission bandwidth configuration per a cell for a transmission bandwidth, a transmission bandwidth configuration of a cell comprising a first bandwidth part dedicated for the cell in the transmission bandwidth and at least one second bandwidth part comprising transmission resources from a shared bandwidth section in the transmission bandwidth, wherein at least one second bandwidth part of the cell overlaps with at least one second bandwidth part of another cell; assign to the two or more cells from the transmission bandwidth non-overlapping bandwidth parts according to transmission bandwidth configurations of the two or more cells; and transmit at least to one of the two or more cells, per a cell and per an assigned bandwidth part, at least an indication of the bandwidth part assigned to the cell amongst bandwidth parts in the transmission bandwidth configuration of the cell, to be used for communication in the cell.

According to an embodiment, there is provided an apparatus comprising at least one processor and at least one memory storing instructions that, when executed by the at least one processor, cause the apparatus at least to: receive from a first apparatus a transmission bandwidth configuration of a cell for a transmission bandwidth, the transmission bandwidth comprising a first bandwidth part and at least one second bandwidth part comprising transmission resources of the first bandwidth part and additional transmission resources from a shared bandwidth section in the transmission bandwidth; configure second apparatuses connected to the cell with the transmission bandwidth configuration to be used for communication in the cell; receive, from the first apparatus, an indication of one bandwidth parts assigned to the cell; inform, per a second apparatus, the second apparatus of a bandwidth part to be used amongst the one or more bandwidth parts assigned to the cell; and use the one or more bandwidth parts assigned to the cell for communication in the cell.

Referring to Fig. 7, the one or more communication control circuitries 720 of the apparatus 701 comprise at least a bandwidth part (BWP) controller circuitry 721, which is configured at least assign non-overlapping bandwidth parts, as discussed for example with Fig. 2, Fig. 3, Fig. 5 and Fig. 6. To this end, the BWP controller circuitry 721 of the apparatus 701 is configured to carry out at least some of the functionalities described above, e.g., by means of Fig. 1 to Fig. 6, for example, using one or more individual circuitries.

Referring to Fig. 7, the memory 730 may be implemented using any suitable data storage technology, such as semiconductor based memory devices, flash memory, magnetic memory devices and systems, optical memory devices and systems, fixed memory and removable memory.

Referring to Fig. 7, the apparatus 701 may further comprise different interfaces 710 such as one or more communication interfaces (TX/RX) comprising hardware and/or software for realizing communication connectivity according to one or more communication protocols. The one or more communication interfaces 710 may enable connecting to the Internet and/or to a core network of a wireless communications network and/or to a radio access network and/or to other apparatuses within range of the apparatus. The one or more communication interface 710 may provide the apparatus with communication capabilities to communicate in a cellular communication system and enable communication to different network nodes or elements or devices, for example. The one or more communication interfaces 710 may comprise standard well-known components such as an amplifier, filter, frequency-converter, (de)modulator, and encoder/decoder circuitries, controlled by the corresponding controlling units, and one or more antennas.

In an embodiment, as shown in Fig. 8, at least some of the functionalities of the apparatus of Fig. 7 may be shared between two physically separate devices, forming one operational entity. Therefore, the apparatus may be seen to depict the operational entity comprising one or more physically separate devices for executing at least some of the described processes. Thus, the apparatus of Fig. 8, utilizing such shared architecture, may comprise a remote control or central unit CU 820, such as a host computer or a server computer, operatively coupled (e.g. via a wireless or wired network) to a remote distributed unit DU 822 located in an access device, for example. In an embodiment, at least some of the described processes may be performed by the CU 820. In an embodiment, the execution of at least some of the described processes may be shared among the DU 822 and the CU 820.

Similar to Fig. 7, the apparatus of Fig. 8 may comprise one or more communication control circuitry (CNTL) 720, such as at least one processor, and at least one memory (MEM) 730, including one or more algorithms (PROG) 731, such as a computer program code (software SW, or instructions) wherein the at least one memory and the computer program code (software, instructions) are configured, with the at least one processor, to cause the apparatus to carry out any one of the exemplified functionalities described above, e.g., by means of Fig. 1 to Fig. 6, for example.

Referring to Fig. 9, the one or more communication control circuitries 920 of the apparatus 901 comprise at least a bandwidth part (BWP) user circuitry 921, which is configured at least to receive bandwidth part configurations, information on assigned bandwidth parts, and to use the assigned bandwidth parts to communicate in a cell, as discussed with Fig.2, Fig. 4, Fig. 5 and Fig. 6. To this end, the value determining circuitry 921 of the apparatus 901 is configured to carry out at least some of the functionalities described above, e.g., by means of Fig. 1 to Fig. 6, for example, using one or more individual circuitries.

Referring to Fig. 9, the memory 930 may be implemented using any suitable data storage technology, such as semiconductor based memory devices, flash memory, magnetic memory devices and systems, optical memory devices and systems, fixed memory and removable memory.

Referring to Fig. 9, the apparatus 901 may further comprise different interfaces 910 such as one or more communication interfaces (TX/RX) comprising hardware and/or software for realizing communication connectivity according to one or more communication protocols. The one or more communication interfaces 910 may enable connecting to the Internet and/or to a core network of a wireless communications network and/or to a radio access network and/or to different device components (apparatuses) connected or connecting to a cell, and/or to other apparatuses within range of the apparatus. The one or more communication interface 910 may provide the apparatus with communication capabilities to communicate in a cellular communication system and enable communication to different network nodes or elements or devices, for example. The one or more communication interfaces 910 may comprise standard well-known components such as an amplifier, filter, frequency-converter, (de)modulator, and encoder/decoder circuitries, controlled by the corresponding controlling units, and one or more antennas.

In an embodiment, as shown in Fig. 10, at least some of the functionalities of the apparatus of Fig. 9 may be shared between two physically separate devices, forming one operational entity. Therefore, the apparatus may be seen to depict the operational entity comprising one or more physically separate devices for executing at least some of the described processes. Thus, the apparatus of Fig. 10, utilizing such shared architecture, may comprise a remote control or central unit CU 1020, such as a host computer or a server computer, operatively coupled (e.g. via a wireless or wired network) to a remote distributed unit DU 1022 located in an edge device or access device, for example. In an embodiment, at least some of the described processes may be performed by the CU 1020. In an embodiment, the execution of at least some of the described processes may be shared among the DU 1022 and the CU 1020. For example, the DU 1022 may be an O-DU and the CU 1030 may be an open RAN control unit, O-CU.

Similar to Fig. 9, the apparatus of Fig. 10 may comprise one or more communication control circuitry (CNTL) 920, such as at least one processor, and at least one memory (MEM) 930, including one or more algorithms (PROG) 931, such as a computer program code (software SW, or instructions) wherein the at least one memory and the computer program code (software, instructions) are configured, with the at least one processor, to cause the apparatus to carry out any one of the exemplified functionalities described above, e.g., by means of Fig. 1 to Fig. 6, for example.

In embodiments, the CU 820, 1020 may generate a virtual network through which the CU 820, 1020 communicates with the DU 822, 1022. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the CU). External network virtualization is targeted to optimized network sharing. Another category is internal virtual networking which provides network-like functionality to the software containers on a single system.

In an embodiment, the virtual network may provide flexible distribution of operations between the DU and the CU. In practice, any digital signal processing task may be performed in either the DU or the CU and the boundary where the responsibility is shifted between the DU and the CU may be selected according to implementation.

According to an embodiment, there is a system that comprises at least one or more apparatuses configured at least to assign non-overlapping bandwidth parts as discussed with Fig. 2, Fig. 3, Fig. 5 and/or Fig. 6, and one or more apparatuses configured to at least use assigned bandwidth parts, as discussed with Fig. 2, Fig. 4, Fig. 5 and/or Fig. 6.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as an access device or node or a network node or network entity, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or other computing or network device.

In an embodiment, at least some of the processes described in connection with Fig. 1 to Fig. 6 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Fig. 1 to Fig. 6 or operations thereof.

Embodiments and examples as described may also be carried out in the form of a computer process defined by a computer program or portions thereof. Embodiments of the functionalities described in connection with Fig. 1 to Fig. 6 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal ) as opposed to a limitation on data storage persistency (e.g., random access memory RAM vs. read only memory ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus (160) comprising at least:
means for configuring (301) two or more cells with a transmission bandwidth configuration per a cell for a transmission bandwidth, a transmission bandwidth configuration of a cell comprising a first bandwidth part dedicated for the cell in the transmission bandwidth and at least one second bandwidth part comprising transmission resources from a shared bandwidth section in the transmission bandwidth, wherein at least one second bandwidth part of the cell overlaps with at least one second bandwidth part of another cell;
means for assigning (302) to the two or more cells from the transmission bandwidth non-overlapping bandwidth parts according to transmission bandwidth configurations of the two or more cells; and
means for transmitting (303) at least to one of the two or more cells, per a cell and per an assigned bandwidth part, at least an indication of the bandwidth part assigned to the cell amongst bandwidth parts in the transmission bandwidth configuration of the cell, to be used for communication in the cell.

2. The apparatus (160) of claim 1, further comprising:
means for providing said indication using identification information associated with the corresponding bandwidth part in the transmission bandwidth configuration of the cell, or using range of frequencies, or using one or more indexes of transmission resources in the bandwidth part assigned, or range of transmission resources in the bandwidth part assigned.

3. The apparatus (160) of claim 1 or 2, further comprising:
means for determining, according to one or more preconfigured rules, when to reassign transmission bandwidth parts to at least one of the two or more cells, the means for determining causing the means for assigning to reassign non-overlapping transmission bandwidth parts.

4. The apparatus (160) of claim 3, further comprising:
means for receiving traffic related information from at least one of the two or more cells,
wherein the means for determining are configured to use the traffic related information.

5. The apparatus (160) of any preceding claims, further comprising:
means for providing the indication of the bandwidth part assigned with timing information indicating at least a start time for the bandwidth part assigned.

6. The apparatus (160) of any preceding claims, wherein the apparatus provides a near real time radio access network intelligent controller functionality and the indication is a command to a distributed unit responsible for performing radio access functionalities of the cell.

7. An apparatus (162-1) comprising at least:
means for receiving (401) from a first apparatus a transmission bandwidth configuration of a cell for a transmission bandwidth, the transmission bandwidth comprising a first bandwidth part and at least one second bandwidth part comprising transmission resources of the first bandwidth part and additional transmission resources from a shared bandwidth section in the transmission bandwidth;
means for configuring (402) second apparatuses connected to the cell with the transmission bandwidth configuration to be used for communication in the cell;
means for receiving (403), from the first apparatus, an indication of one bandwidth parts assigned to the cell;
means for informing (404), per a second apparatus, the second apparatus of a bandwidth part to be used amongst the one or more bandwidth parts assigned to the cell; and
means for using (405) the one or more bandwidth parts assigned to the cell for communication in the cell,
wherein for example the means for using (405) are configured to use the one or more bandwidth parts until a new indication of one or more bandwidth parts assigned to the cell is received,
wherein for example when the indication further comprises timing information indicating at least a start time for a bandwidth part assigned, the means for informing the second apparatuses are configured to inform the start time to the second apparatuses using said bandwidth part, and the means for using are configured to start to use the bandwidth part at the indicated start time,
wherein for example the apparatus is a distributed unit responsible for performing radio access functionalities of the cell and is configured to receive the indication as a command from a near real time radio access network intelligent controller.

8. The apparatus (160; 162-1) of any preceding claim, wherein a second bandwidth part comprises transmission resources of the first bandwidth part and additional transmission resources from the shared bandwidth section.

9. The apparatus (160; 162-1) of any preceding claim, wherein the first bandwidth part is an initial bandwidth part of the cell and the at least one second bandwidth part is a permitted transmission bandwidth of the cell when assigned to the cell.

10. The apparatus (160; 162-1) of any preceding claim, wherein the means comprise at least one processor and at least one memory storing instructions that, when executed by the at least one processor, cause the performance of the apparatus.

11. A method comprising:
configuring (301) two or more cells with a transmission bandwidth configuration per a cell for a transmission bandwidth, a transmission bandwidth configuration of a cell comprising a first bandwidth part dedicated for the cell in the transmission bandwidth and at least one second bandwidth part comprising transmission resources from a shared bandwidth section in the transmission bandwidth, wherein at least one second bandwidth part of the cell overlaps with at least one second bandwidth part of another cell;
assigning (302) to the two or more cells from the transmission bandwidth non-overlapping bandwidth parts according to transmission bandwidth configurations of the two or more cells; and
transmitting (303) at least to one of the two or more cells, per a cell and per an assigned bandwidth part, at least an indication of the bandwidth part assigned to the cell amongst bandwidth parts in the transmission bandwidth configuration of the cell, to be used for communication in the cell.

12. A method comprising:
receiving (401) from a first apparatus a transmission bandwidth configuration of a cell for a transmission bandwidth, the transmission bandwidth comprising a first bandwidth part and at least one second bandwidth part comprising transmission resources of the first bandwidth part and additional transmission resources from a shared bandwidth section in the transmission bandwidth;
configuring (402) second apparatuses connected to the cell with the transmission bandwidth configuration to be used for communication in the cell;
receiving (403), from the first apparatus, an indication of one bandwidth parts assigned to the cell;
informing (404), per a second apparatus, the second apparatus of a bandwidth part to be used amongst the one or more bandwidth parts assigned to the cell; and
using (405) the one or more bandwidth parts assigned to the cell for communication in the cell.

13. A computer readable medium comprising program instructions which, when executed by an apparatus, cause the apparatus to perform at least one of a first process, or a second process,
wherein the first process comprises at least:
configuring (301) two or more cells with a transmission bandwidth configuration per a cell for a transmission bandwidth, a transmission bandwidth configuration of a cell comprising a first bandwidth part dedicated for the cell in the transmission bandwidth and at least one second bandwidth part comprising transmission resources from a shared bandwidth section in the transmission bandwidth, wherein at least one second bandwidth part of the cell overlaps with at least one second bandwidth part of another cell;
assigning (302) to the two or more cells from the transmission bandwidth non-overlapping bandwidth parts according to transmission bandwidth configurations of the two or more cells; and
transmitting (303) at least to one of the two or more cells, per a cell and per an assigned bandwidth part, at least an indication of the bandwidth part assigned to the cell amongst bandwidth parts in the transmission bandwidth configuration of the cell, to be used for communication in the cell, and
wherein the second process comprises at least:
receiving (401) from a first apparatus a transmission bandwidth configuration of a cell for a transmission bandwidth, the transmission bandwidth comprising a first bandwidth part and at least one second bandwidth part comprising transmission resources of the first bandwidth part and additional transmission resources from a shared bandwidth section in the transmission bandwidth;
configuring (402) second apparatuses connected to the cell with the transmission bandwidth configuration to be used for communication in the cell;
receiving (403), from the first apparatus, an indication of one bandwidth parts assigned to the cell;
informing (404), per a second apparatus, the second apparatus of a bandwidth part to be used amongst the one or more bandwidth parts assigned to the cell; and
using (405) the one or more bandwidth parts assigned to the cell for communication in the cell, wherein for example
the computer readable medium is a non-transitory computer readable medium.

14. A computer program comprising instructions which, when executed by an apparatus, cause the apparatus to perform at least one of a first process, or a second process,
wherein the first process comprises at least:
configuring (301) two or more cells with a transmission bandwidth configuration per a cell for a transmission bandwidth, a transmission bandwidth configuration of a cell comprising a first bandwidth part dedicated for the cell in the transmission bandwidth and at least one second bandwidth part comprising transmission resources from a shared bandwidth section in the transmission bandwidth, wherein at least one second bandwidth part of the cell overlaps with at least one second bandwidth part of another cell;
assigning (302) to the two or more cells from the transmission bandwidth non-overlapping bandwidth parts according to transmission bandwidth configurations of the two or more cells; and
transmitting (303) at least to one of the two or more cells, per a cell and per an assigned bandwidth part, at least an indication of the bandwidth part assigned to the cell amongst bandwidth parts in the transmission bandwidth configuration of the cell, to be used for communication in the cell, and
wherein the second process comprises at least:
receiving (401) from a first apparatus a transmission bandwidth configuration of a cell for a transmission bandwidth, the transmission bandwidth comprising a first bandwidth part and at least one second bandwidth part comprising transmission resources of the first bandwidth part and additional transmission resources from a shared bandwidth section in the transmission bandwidth;
configuring (402) second apparatuses connected to the cell with the transmission bandwidth configuration to be used for communication in the cell;
receiving (403), from the first apparatus, an indication of one bandwidth parts assigned to the cell;
informing (404), per a second apparatus, the second apparatus of a bandwidth part to be used amongst the one or more bandwidth parts assigned to the cell; and
using (405) the one or more bandwidth parts assigned to the cell for communication in the cell.
